# EUROPEAN PATENT APPLICATION

(11) **EP 4 822 948 A1**
(43) Date of publication of application: **14.10.2026**
(21) Application number: 24899508.6
(22) Date of filing: 25.10.2024
(51) Int. Cl.: H02K 1/2706, H02K 1/274, H02K 1/276, H02K 1/22, H02K 1/12, H02K 1/16

(54) **ELECTRIC MOTOR, AIR SUPPLY ASSEMBLY AND AIR HANDLING DEVICE**

(30) Priority: 06.12.2023 CN 202311670605
(71) Applicant: Guangdong Welling Motor Manufacturing Co., Ltd., Foshan, Guangdong 528311 (CN); Guangdong Meizhi Compressor Co., Ltd., Foshan, Guangdong 528311 (CN); Guangdong Meizhi Precision-Manufacturing Co., Ltd., Foshan, Guangdong 528303 (CN)
(72) Inventor: MAO, Linshu, Foshan, Guangdong 528311 (CN); JIA, Wuhao, Foshan, Guangdong 528311 (CN); XU, Fei, Foshan, Guangdong 528311 (CN); CHENG, Yunfeng, Foshan, Guangdong 528311 (CN)
(74) Representative: Ran, Handong
(86) International application number: PCT/CN2024/127382
(87) International publication number: WO 2025/118865

(57) **Abstract**

Disclosed in the present application are an electric motor, an air supply assembly and an air handling device, the electric motor (10) comprising: a rotor assembly (200) and a stator assembly (100). The rotor assembly (200) is configured to rotate about a rotation axis (20), and the rotor assembly (200) comprises a plurality of permanent magnets (230) distributed around the rotation axis (20), wherein the plurality of permanent magnets (230) comprise first permanent magnets (230a) and second permanent magnets (230b), the first permanent magnets (230a) and the second permanent magnets (230b) being distributed on two opposite sides of the rotation axis (20); a first direction (X) is perpendicular to the rotation axis (20); and each first permanent magnet (230a) is provided with a first wall surface (231) facing away from the corresponding second permanent magnet (230b), each second permanent magnet (230b) is provided with a second wall surface (232) facing away from the corresponding first permanent magnet (230a), and the minimum distance between the first wall surface (231) and the second wall surface (232) is D₁. The stator assembly (100) comprises stator cores (110), and the maximum outer diameter of each stator core (110) is D₂, where 0.5 ≤ D₁/D₂ ≤0.6.

## Description

### CROSS-REFERENCE TO RELATED APPLICATION

This application claims priority to Chinese Patent Application No. 202311670605.7, filed on December 6, 2023, and entitled "ELECTRIC MOTOR, AIR SUPPLY ASSEMBLY AND AIR TREATMENT DEVICE," the entire contents of which are incorporated herein by reference for all purposes.

### TECHNICAL FIELD

The present disclosure relates to the field of electrically driven components, and more particularly to an electric motor, an air supply assembly, and an air treatment device.

### BACKGROUND

In an electric motor, core loss and stator winding AC loss are two main types of energy loss. Core loss is generated in a core by electromagnetic force during operation. It mainly includes hysteresis loss and eddy current loss of the magnetic material. Hysteresis loss is caused by continuous flipping of magnetic domains in the core as the magnetization state changes, which produces frictional heat. Eddy current loss is caused by eddy currents induced in the core by a varying magnetic field, with loss arising from electrical resistance as the eddy currents flow. Stator winding AC loss is generated by current in the conductors flowing through electrical resistance during operation. It mainly includes resistive loss of the conductors and additional loss arising from magnetic interaction between the conductors and the core.

Under heavy load and light load, the stator winding AC loss and the core loss of an electric motor differ, leading to different machine efficiencies under the two load conditions. In the related art, an electric motor is designed to focus on either heavy-load efficiency or light-load efficiency, thus exhibiting low efficiency at the other load condition. When an electric motor operates under both heavy-load and light-load conditions, its comprehensive efficiency under various operating conditions is unsatisfactory, regardless of whether the design emphasizes heavy-load conditions or light-load conditions.

### SUMMARY

To this end, the present disclosure provides an electric motor, an air supply assembly, and an air treatment device, to at least partially solve one of the above technical problems.

In accordance with a first aspect of the present disclosure, an embodiment provides an electric motor including a rotor assembly and a stator assembly.

The rotor assembly includes a plurality of permanent magnets distributed around a rotation axis and is configured to rotate about the rotation axis. The plurality of permanent magnets includes a first permanent magnet and a second permanent magnet located on opposite sides of the rotation axis along a first direction perpendicular to the rotation axis. The first permanent magnet has a first wall surface facing away from the second permanent magnet, and the second permanent magnet has a second wall surface facing away from the first permanent magnet. A minimum distance between the first wall surface and the second wall surface is D₁.

The stator assembly includes a stator core having an annular yoke arranged around an outer side of the rotor assembly and a plurality of teeth. The teeth are distributed around the outer side of the rotor assembly and each tooth has one end connected to an inner peripheral wall of the yoke and another end spaced apart from the rotor assembly.

The stator core has a maximum outer diameter D₂, where 0.5 ≤ D₁/D₂ ≤ 0.6.

In some embodiments, 0.53 ≤ D₁/D₂ ≤ 0.57.

In some embodiments, 40 mm ≤ D₁ ≤ 100 mm.

In some embodiments, 60 mm ≤ D₁ ≤ 80 mm.

In some embodiments, the stator core has N teeth, where N≥6. Each tooth has a third wall surface and a fourth wall surface arranged opposite each other along a circumferential direction of the rotation axis. A minimum width Wt between the third wall surface and the fourth wall surface satisfies: $\frac{π \times \left({D}_{1}+{D}_{2}\right)}{8 \times N} \leq Wt \leq \frac{π \times \left({D}_{1}+{D}_{2}\right)}{3 \times N} .$

In some embodiments, the stator core has N teeth, where N≥6. The plurality of teeth includes a first tooth and a second tooth arranged adjacent to each other along the circumferential direction of the rotation axis. The first tooth has a first end member facing away from the yoke. The second tooth has a second end member facing away from the yoke. The first end member and the second end member are spaced apart, such that a minimum width Wx between the first end member and the second end member along the circumferential direction satisfies: $\frac{π \times {D}_{1}}{10 \times N} \leq Wx \leq \frac{π \times {D}_{1}}{5 \times N} .$

In some embodiments, the tooth has a third wall surface on one side in the circumferential direction of the rotation axis. The third wall surface meets the inner peripheral wall at a first boundary line. An outer peripheral wall of the yoke defines the maximum outer diameter of the stator core. A minimum width We between the first boundary line and the outer peripheral wall of the yoke satisfies: $\frac{{D}_{2} - {D}_{1}}{12} \leq We \leq \frac{{D}_{2} - {D}_{1}}{6} .$

In some embodiments, each tooth has the third wall surface and the fourth wall surface arranged opposite each other along the circumferential direction of the rotation axis with the minimum width Wt therebetween. The plurality of teeth includes the first tooth and the second tooth arranged adjacent to each other along the circumferential direction. The first tooth has the first end member facing away from the yoke. The second tooth has the second end member facing away from the yoke. The first end member and the second end member are spaced apart with the minimum width Wx therebetween. The rotor assembly further includes a rotor core and a shaft. The rotor core includes an annular inner core arranged around the rotation axis, and an outer core. The shaft extends through the inner core. The outer core includes a plurality of core segments distributed around the inner core, with the core segments and permanent magnets alternately disposed in the circumferential direction one-by-one about the rotation axis. The plurality of core segments includes a first core segment and a second core segment adjacent to each other along the circumferential direction. The first core segment has a third end member facing away from the inner core. The second core segment has a fourth end member facing away from the inner core. The third end member and the fourth end member are spaced apart, such that a minimum width K between the third end member and the fourth end member satisfies: $Wx \leq K \leq Wt .$

In some embodiments, each of the core segments is disconnected from each other along the circumferential direction, and each core segment has an end member proximal to the inner core and spaced apart therefrom.

In some embodiments, the rotor assembly further includes an injection molded member that connects the outer core and the inner core by filling a gap therebetween.

In some embodiments, the stator core includes a plurality of laminations stacked along the direction parallel to the rotation axis. The lamination satisfies any one of the following conditions a) - d):
a) the lamination is integrally stamped from a first sheet body;
b) the lamination is formed by joining a plurality of core units distributed along the circumferential direction of the rotation axis, each core unit being integrally stamped from a second sheet body and including at least one of the teeth;
c) the lamination is formed by bending a strip-shaped intermediate body circumferentially into a ring and joining ends thereof, the intermediate body being integrally stamped from a third sheet;
d) the lamination is provided with a limit member, the limit member is a recess formed on a surface and a protrusion formed on another surface of the lamination along a second direction, the second direction being parallel to the rotation axis.

In some embodiments, the stator assembly further includes a coil winding wound on each of the teeth, where the coil winding is a copper wire winding.

In some embodiments, the stator assembly further includes a coil winding wound on each of the teeth, where the coil winding is an aluminum wire winding.

In accordance with a second aspect of the present disclosure, an embodiment provides an air supply assembly, including the electric motor according to any of the above embodiments.

In accordance with a third aspect of the present disclosure, an embodiment provides an air treatment device, including the air supply assembly described above.

### BRIEF DESCRIPTION OF DRAWINGS

For a clearer illustration of the technical schemes of the embodiments of the present disclosure or the related art, a brief introduction will be given below to the accompanying drawings that are required to be used in the description of the embodiments or the related art. Obviously, the drawings described below are merely some embodiments of the present disclosure. For those of ordinary skill in the art, other drawings may be obtained based on the structures shown in these drawings without creative effort.
FIG. 1 is a side view of a combination of a stator core, a rotor core, and permanent magnets in an electric motor according to an embodiment of the present disclosure, as viewed from a perspective parallel to a second direction;
FIG. 2 is a side view of a stator core in an electric motor according to an embodiment of the present disclosure, as viewed from a perspective parallel to the second direction;
FIG. 3 is an enlarged partial view of portion A1 in FIG. 2;
FIG. 4 is a side view of a rotor assembly according to an embodiment of the present disclosure, as viewed from a perspective parallel to the second direction;
FIG. 5 is a side view of a combination of permanent magnets according to an embodiment of the present disclosure, as viewed from a perspective parallel to the second direction;
FIG. 6 is a side view of a stator core according to an embodiment of the present disclosure, as viewed from a perspective parallel to the second direction;
FIG. 7 is an enlarged partial view of portion A2 in FIG. 6;
FIG. 8 is an enlarged partial view of portion A3 in FIG. 6;
FIG. 9 is a side view of a core lamination according to an embodiment of the present disclosure, as viewed from a perspective parallel to the second direction;
FIG. 10 is a perspective view of a stacked stator core according to an embodiment of the present disclosure;
FIG. 11 is a side view of an inner core according to an embodiment of the present disclosure, as viewed from a perspective parallel to the second direction;
FIG. 12 is a perspective view of a stator assembly according to an embodiment of the present disclosure, wherein the stator assembly includes an injection molded member;
FIG. 13 is a side view of a lamination according to an embodiment of the present disclosure, as viewed from a perspective parallel to the second direction;
FIG. 14 is a side view of a lamination according to an embodiment of the present disclosure, as viewed from a perspective parallel to the second direction;
FIG. 15 is a side view of a stator core according to an embodiment of the present disclosure, as viewed from a perspective parallel to the second direction, wherein an inner core and an outer core of the stator core are connected; and
FIG. 16 is a graph showing a motor efficiency as a function of D₁/D₂ according to an embodiment of the present disclosure, wherein a high-speed heavy-load efficiency curve, a low-speed light-load efficiency curve, and a comprehensive average efficiency curve of the electric motor are shown.

### Reference Numerals:

electric motor 10;
stator assembly 100;
stator core 110; yoke 111; second trench for injection molding 1111; limit member 1112; tooth 112; first end member 1121; second end member 1122; third wall surface 1123; fourth wall surface 1124; first boundary line 1125; first tooth 112a; second tooth 112b; lamination 113;
rotor assembly 200;
rotor core 210; inner core 211; outer core 212; core segment 2121; third end member 21211; fourth end member 21212; first limit protrusion 21213; second limit protrusion 21214; third limit protrusion 21215; fourth limit protrusion 21216; first trench for injection molding 21217; core lamination 213; mounting slot 214; first core segment 2121a; second core segment 2121b;
injection molded member 220;
permanent magnet 230; first wall surface 231; second wall surface 232; fifth wall surface 233; sixth wall surface 234; seventh wall surface 235; eighth wall surface 236; first permanent magnet 230a; second permanent magnet 230b;
rotation axis 20; and
first direction X; second direction Y; circumferential direction m.

The realization of the objectives, functional features and advantages of the present disclosure will be further described in conjunction with the embodiments and with reference to the accompanying drawings.

### DETAILED DESCRIPTION

The technical schemes in the embodiments of the present disclosure will be clearly and completely described below with reference to the accompanying drawings in the embodiments of the present disclosure. It is apparent that the described embodiments are merely some, not all, of the embodiments of the present disclosure. All other embodiments obtained by a person of ordinary skill in the art based on the embodiments described herein without creative efforts shall fall within the scope of the present disclosure.

Under heavy load and light load, the stator winding AC loss and the core loss of an electric motor differ, leading to different machine efficiencies under the two load conditions. In related technologies, an electric motor is designed either to emphasize heavy-load efficiency (actual load > 80% of a rated load) at the expense of light-load efficiency (actual load < 30% of a rated load), or vice versa. When an electric motor operates under both heavy-load and light-load conditions, its comprehensive efficiency is suboptimal regardless of which condition is prioritized during design. That is, when the motor design focuses on the heavy-load condition, because it actually operates under light-load conditions with low efficiency, the comprehensive efficiency of the electric motor is poor; when the motor design focuses on the light-load condition, because it actually operates under heavy-load conditions with low efficiency, the comprehensive efficiency of the electric motor is poor.

To achieve a satisfactory comprehensive efficiency under both heavy-load and light-load conditions, it is necessary to balance the stator winding AC loss and the core loss under different working conditions. However, the specific means for achieving such a balance are not known in the related art. Through analysis and demonstration, the applicant has discovered that a ratio of the outer diameter of the permanent magnets to the outer diameter of the stator core correlates with the comprehensive efficiency of the electric motor. That is, the present disclosure first provides a concept for balancing the stator winding AC loss and the core loss, and under the guidance of this concept, provides specific means to achieve the balance of stator winding AC loss and core loss through experimental verification, thereby achieving the technical effect of better overall efficiency when the electric motor when operating under different working conditions.

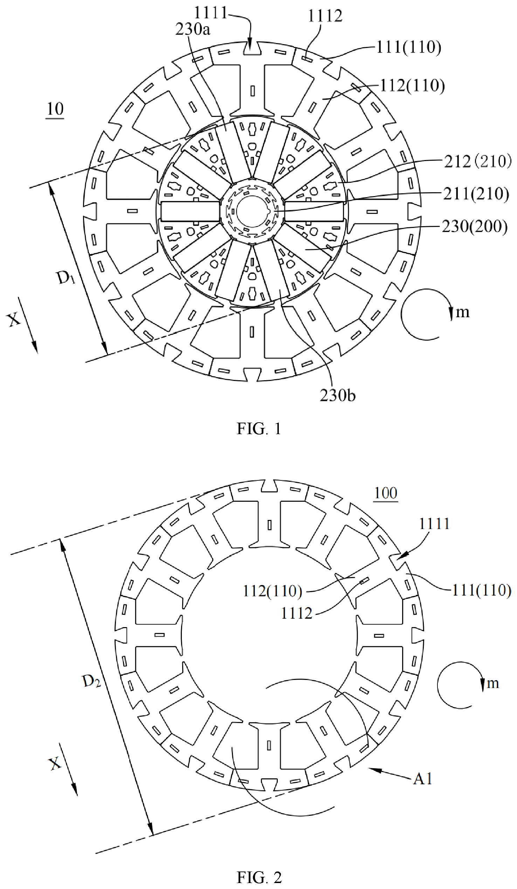

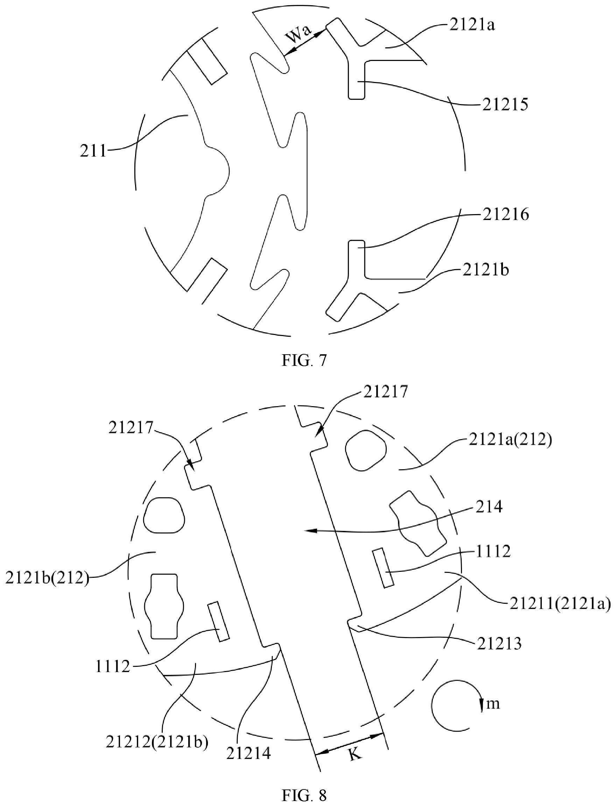

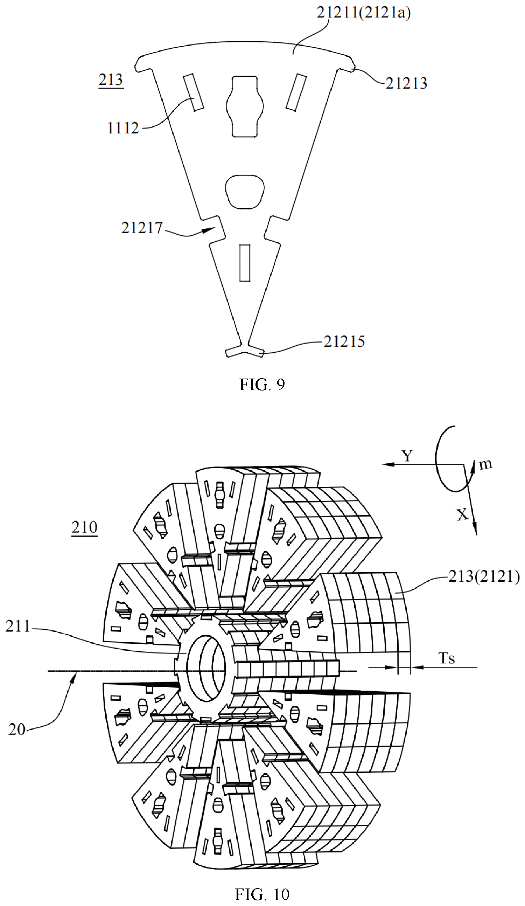

Referring to FIGS. 1-16, some embodiments of the present disclosure provide an electric motor 10 having good comprehensive efficiency under both heavy-load and light-load conditions. Specifically, the electric motor 10 includes a rotor assembly 200 and a stator assembly 100.

Referring to FIGS. 1-4 and 10, the rotor assembly 200 is configured to rotate about a rotation axis 20 relative to the stator assembly 100 when the electric motor 10 is operating. The rotor assembly 200 includes a plurality of permanent magnets 230 distributed around the rotation axis 20. Specifically, the permanent magnets 230 are arranged in a circular array centered on the rotation axis 20, and are equally spaced from one another in a circumferential direction m of the rotation axis 20. The number of permanent magnets 230 may be, for example, 6, 8, 10, 12 and so on, depends on actual needs. For ease of explanation and with reference to FIG. 1, the following description takes 10 permanent magnets 230 as an example.

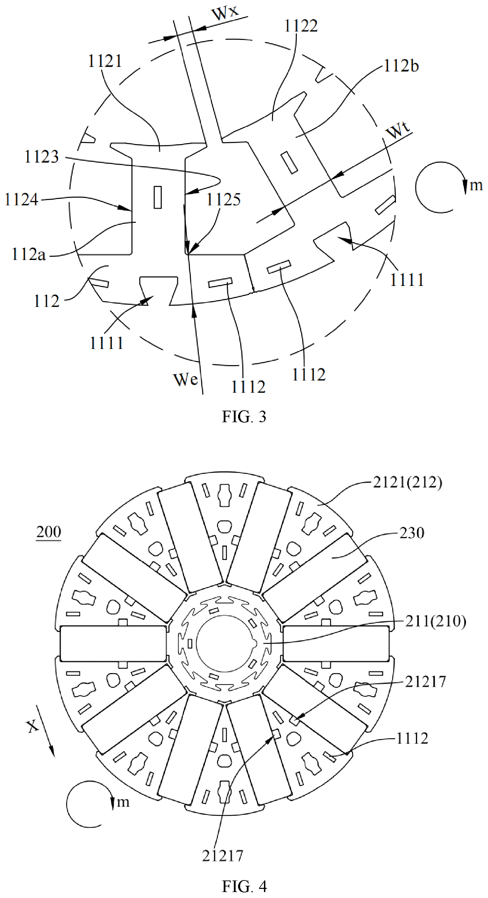

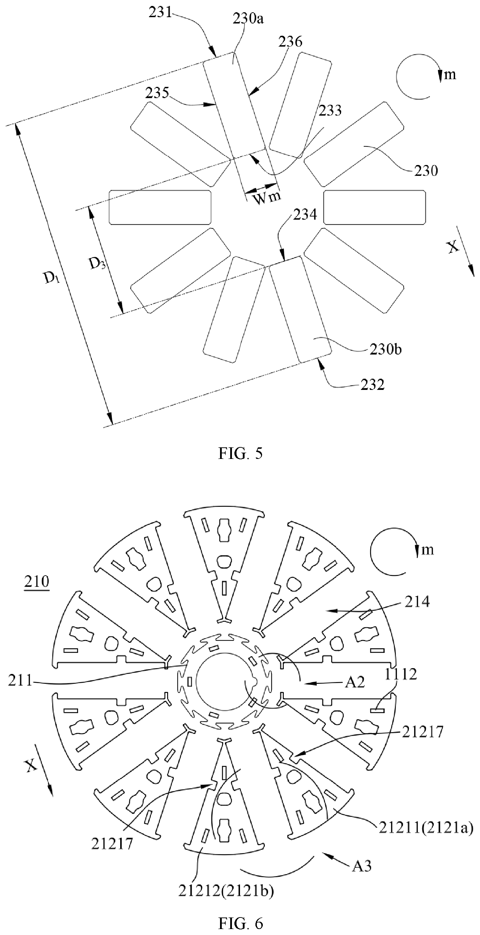

The plurality of permanent magnets 230 includes a first permanent magnet 230a and a second permanent magnet 230b located on opposite sides of the rotation axis 20 along a first direction X perpendicular to the rotation axis 20. In other words, in some embodiments, referring to FIGS. 4 and 5, two of the ten permanent magnets 230 are designated as the first permanent magnet 230a and the second permanent magnet 230b, and the first permanent magnet 230a and the second permanent magnet 230b are located on radially opposite sides of the rotor assembly 200. It should be noted that, as used herein, the "first permanent magnet 230a" and "second permanent magnet 230b" referred to any two permanent magnets 230 that are located on radially opposite sides of the rotor assembly 200. Therefore, in the embodiment shown in FIG. 5, there are five pairs of permanent magnets 230, and the two permanent magnets 230 in each pair may be referred to as the "first permanent magnet 230a" and the "second permanent magnet 230b". In other embodiments, for example, when the rotor assembly 200 includes twelve permanent magnets 230, there are six pairs of "first permanent magnet 230a" and "second permanent magnet 230b". For ease of description, the following description will take the "first permanent magnet 230a" and the "second permanent magnet 230b" of one pair as an example.

Referring to FIGS. 2, 4, and 5, the first permanent magnet 230a has a first wall surface 231 facing away from the second permanent magnet 230b, and the second permanent magnet 230b has a second wall surface 232 facing away from the first permanent magnet 230a. A minimum distance between the first wall surface 231 and the second wall surface 232 is D₁. In particular, the first wall surface 231 and the second wall surface 232 may both be planar surfaces and parallel to each other, in which case, the minimum distance D₁ between the first wall surface 231 and the second wall surface 232 is the distance from any two directly opposite points on the first wall surface 231 and the second wall surface 232, or vice versa. In other embodiments, the first wall surface 231 and the second wall surface 232 are both planar walls and may have a small included angle (the existence of such an included angle may be due to design requirements, or may be caused by manufacturing tolerances or assembly errors); or the first wall surface 231 and the second wall surface 232 may both be curved surfaces, in which case D₁ is the minimum distance between the first wall surface 231 and the second wall surface 232 along a radial direction of the rotor assembly 200.

Referring to FIGS. 5-8, the rotor assembly 200 further includes a rotor core 210 defining a plurality of mounting slots 214 distributed along the circumferential direction m of the rotation axis 20. The number of mounting slots 214 is equal to the number of permanent magnets 230. Each permanent magnet 230 is disposed in a corresponding one of the mounting slots 214. In some embodiments, to facilitate injection molding and fixing of each permanent magnet 230, a side edge of the rotor core 210 facing a permanent magnet 230 may be provided with a first trench for injection molding 21217. The first trench for injection molding 21217 has an opening communicating with the mounting slot 214 and facing the permanent magnet 230. After injection molding of the rotor assembly 200, injection molding material fills the first trench for injection molding 21217 and the gap between the permanent magnet 230 and the rotor core 210, thereby making the positioning of the permanent magnet 230 more stable. The rotor core 210 may include an inner core 211 and an outer core 212. The outer core 212 includes a plurality of core segments 2121 arranged around the rotation axis 20. A mounting slot 214 is formed between each adjacent pair of core segments 2121. Each core segment 2121 is provided with a first trench for injection molding 21217 on each of its two sides along the circumferential direction m, so that each permanent magnet 230 is provided with a first trench for injection molding 21217 on each of its two sides along the circumferential direction m, thereby further improving the positioning stability of the permanent magnet 230. Related structures of the inner core 211 and the outer core 212 of the rotor core 210 are described in detail below.

Referring to FIGS. 1-4 and 10, the stator assembly 100 is arranged around the rotor assembly 200. The stator assembly 100 includes a stator core 110. Specifically, the stator core 110 includes a yoke 111 and a plurality of teeth 112. The yoke 111 is annular and arranged around an outer side of the rotor assembly 200. Each tooth 112 is disposed between the yoke 111 and the rotor core 210 and is connected to the yoke 111. The teeth 112 are distributed around the outer side of the rotor assembly 200. Each tooth 112 has one end connected to an inner peripheral wall of the yoke 111 and another end spaced apart from the rotor assembly 200. Specifically, the teeth 112 are arranged in a circular array centered on the rotation axis 20. Along the circumferential direction m of the rotation axis 20 and are equally spaced from one another in the circumferential direction m of the rotation axis 20. The stator assembly 100 may further include a coil winding wound around each tooth 112.

Referring to FIGS. 1-4 and 10, a maximum outer diameter of the stator core 110 is D₂. In some embodiments, the maximum outer diameter of the stator core 110 may be the maximum outer diameter of an outer peripheral wall of the yoke 111. In some embodiments, D₂ is the maximum outer diameter of an outer peripheral wall of the yoke 111. In other embodiments where the yoke 111 includes additional structures such as outer teeth, D₂ is the maximum outer diameter of the outermost structure. For illustration, the maximum outer diameter of the yoke 111 is used as D₂ in this embodiment. If the outer peripheral wall of the stator core 110 is a regular circle, D₂ is its diameter. If it is irregular, D₂ is the maximum dimension of the outer peripheral wall of the stator core 110 along a direction perpendicular to the rotation axis 20. D₂ can be measured by using a vernier caliper to contact opposite sides of the stator core 110 along a direction perpendicular to the rotation axis 20 and rotating the stator assembly 100 about the rotation axis 20; the maximum reading is D₂.

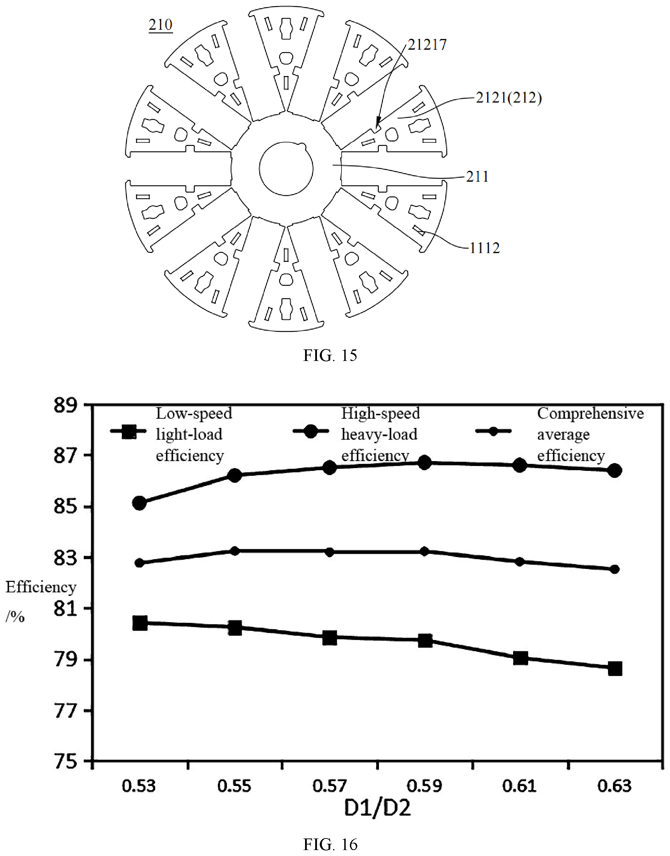

It has been verified that the ratio D₁/D₂ correlates with the distribution of stator winding AC loss and core loss in the electric motor. When D₁/D₂ is small, the core loss may be relatively small; when D₁/D₂ is large, AC loss may be relatively small. Only within a certain range of D₁/D₂ is the distribution of AC loss and core loss optimal, resulting in the highest motor efficiency. When the distribution is optimal, the electric motor 10 operates efficiently under both heavy-load and light-load conditions. As shown in FIG. 16, through experimental analysis, when 0.5 ≤ D₁/D₂ ≤ 0.6 (e.g., 0.5, 0.52, 0.54, 0.56, 0.58, or 0.6), the magnetic field distribution in the permanent magnet electric motor 10 is optimized, minimizing both AC loss and core loss under various operating conditions. Thus, the electric motor 10 achieves better comprehensive efficiency when operating under both heavy-load and light-load conditions. As shown in FIG. 16, when D₁/D₂ is between 0.53 and 0.55, heavy-load efficiency tends to increase while light-load efficiency tends to decrease. When D₁/D₂ is between 0.61 and 0.63, both heavy-load and light-load efficiencies show a slight decrease. The optimal comprehensive efficiency occurs in the middle range between 0.53 and 0.63. After verification, when 0.5 ≤ D₁/D₂ ≤ 0.6, the comprehensive efficiency of the electric motor 10 is favorable.

To further improve comprehensive efficiency, in some embodiments, 0.53 ≤ D₁/D₂ ≤ 0.57, e.g., 0.53, 0.54, 0.55, 0.56, or 0.57. In this range, the comprehensive efficiency of the electric motor 10 is even better.

Referring to FIGS. 1-4 and 10, in some embodiments, 40 mm ≤ D₁ ≤ 100 mm, e.g., 40 mm, 50 mm, 60 mm, 70 mm, 80 mm, 90 mm, or 100 mm. This range enhances the correlation between the ratio D₁/D₂ and the comprehensive efficiency of the electric motor 10, and while further improving the comprehensive efficiency of the electric motor 10, the predictions of efficiency improvement are more accurate. Preferably, 60 mm ≤ D₁ ≤ 80 mm, e.g., 60 mm, 65 mm, 70 mm, 75 mm, or 80 mm. When 60 mm ≤ D₁ ≤ 80 mm, the correlation between the ratio D₁/D₂ and the comprehensive efficiency of the electric motor 10 is even stronger, and while further improving the comprehensive efficiency of the electric motor 10, the predictions of efficiency improvement are even more accurate.

To distribute core loss evenly between the teeth 112 and the yoke 111 of the electric motor 10, further optimization on the electric motor 10 is provided. As shown in FIGS. 1-5, and 10, in some embodiments, the stator core 110 has N teeth 112, where N ≥ 6, and N may be greater than the number of permanent magnets 230. Each tooth 112 has a third wall surface 1123 and a fourth wall surface 1124 opposite each other along the circumferential direction m of the rotation axis 20. A minimum width Wt between the third wall surface 1123 and the fourth wall surface 1124 satisfies: $\frac{π \times \left({D}_{1}+{D}_{2}\right)}{8 \times N} \leq Wt \leq \frac{π \times \left({D}_{1}+{D}_{2}\right)}{3 \times N} ,$

Specifically, the above formula is equivalent to: $\frac{\left({D}_{1}+{D}_{2}\right)}{2} \times π \times \frac{1}{N} \times \frac{1}{4} \leq Wt \leq \frac{\left({D}_{1}+{D}_{2}\right)}{2} \times π \times \frac{1}{N} \times \frac{2}{3} ,$ where, let $\frac{\left({D}_{1}+{D}_{2}\right)}{2} \times π \times \frac{1}{N} = {T}_{1} ,$ thus, $\frac{{T}_{1}}{4} \leq Wt \leq \frac{2 {T}_{1}}{3} ,$ where T₁ substantially equals the theoretical maximum space available in a circumferential direction m of the stator assembly 100 at a radially middle portion of a single tooth 112. Thus, Wt is between T₁/4 and 2T₁/3 of the theoretical maximum space at the middle position of the tooth 112. Specifically, Wt may be T₁/4, T₁/3, 5T₁/12, T₁/2, 7T₁/12, or 2T₁/3. This configuration enables the core loss of the stator assembly 100 to be evenly distributed between the teeth 112 and the yoke 111 of the electric motor 10. It should be noted that when the plurality of laminations of the tooth 112 have different dimensions along a direction parallel to the rotation axis 20, Wt is the width dimension of the smallest lamination among the laminations along the circumferential direction m.

It should be noted that, in the present embodiment, the third wall surface 1123 and the fourth wall surface 1124 are planar and are parallel to each other. In this case, Wt is a width between any two directly opposite points on the third wall surface 1123 and the fourth wall surface 1124. In other embodiments, the third wall surface 1123 and the fourth wall surface 1124 are planar and have an included angle therebetween (the angle may be due to design requirements or may be manufacturing tolerances). In this case, Wt is the minimum width between the third wall surface 1123 and the fourth wall surface 1124. Wt may be measured by using a vernier caliper to abut two measuring jaws thereof respectively against the third wall surface 1123 and the fourth wall surface 1124 and translating the vernier caliper along the radial direction of the stator assembly 100; the minimum reading is the minimum width Wt. In another embodiment, the third wall surface 1123 and the fourth wall surface 1124 may also be of other irregular shapes. The definition of Wt in this embodiment is the same as that in the foregoing embodiments, and a detailed description thereof is omitted here.

As shown in FIGS. 1-5, and 10 in some embodiments, the stator core 110 has N teeth 112, where N ≥ 6, and N may be greater than the number of permanent magnets 230. The plurality of teeth 112 include a first tooth 112a and a second tooth 112b arranged adjacent to each other along the circumferential direction m of the rotation axis 20. The first tooth 112a and the second tooth 112b are spaced apart from each other, and the space between them (i.e., the slot) accommodates the coil winding. It should be noted that the first tooth 112a and the second tooth 112b are any two teeth 112 adjacent to each other along the circumferential direction m among the teeth 112, and the difference in naming therebetween is only for distinction. The first tooth 112a has a third end member 1121 (the shoe of the first tooth 112a) away from the yoke 111. The second tooth 112b has a fourth end member 1122 (the shoe of the second tooth 112b) away from the yoke 111. Along the circumferential direction m, the third end member 1121 and the fourth end member 1122 are spaced apart, and a minimum width Wx between them satisfies: $\frac{π \times {D}_{1}}{10 \times N} \leq Wx \leq \frac{π \times {D}_{1}}{5 \times N} ,$

Specifically, the above formula is equivalent to: ${D}_{1} \times π \times \frac{1}{N} \times \frac{1}{10} \leq Wx \leq {D}_{1} \times π \times \frac{1}{N} \times \frac{1}{5} ,$ where, let ${D}_{1} \times π \times \frac{1}{N} = {T}_{2} ,$ thus, $\frac{{T}_{2}}{10} \leq Wx \leq \frac{{T}_{2}}{5} ,$ where T₂ substantially equals the theoretical maximum circumferential space between the side walls of a single permanent magnet 230 at a side facing away from the rotation axis 20. Wx may be, for example, T₂/10, 3T₂/25, 7T₂/50, 4T₂/25, or T₂/5. The width between the shoes of the stator assembly 110 affects core loss in the shoes and the sinusoidal nature of the air gap magnetic flux density, impacting motor efficiency, cogging torque, and torque ripple. Cogging torque is the torque generated by the interaction between the permanent magnets 230 and the armature teeth when the motor windings are not energized, caused by fluctuations in the tangential component of the interaction force. When Wx is between T₂/10 and T₂/5, the distribution of air gap magnetic flux density is altered, reducing cogging torque of the electric motor 10.

As shown in FIGS. 1-5, and 10, in some embodiments, each tooth 112 has the third wall surface 1123 and the fourth wall surface 1124 on the opposite sides in the circumferential direction m of the rotational 20. The third wall surface 1123 meets the inner peripheral wall of the yoke 111 at a boundary line 1125. If there is a chamfer (rounded or straight) at the junction, the boundary line 1125 is defined as the edge of the chamfer away from the third wall surface 1123. In this embodiment, the outer peripheral wall of the yoke 111 defines the maximum outer diameter of the stator core 110 (in other embodiments, outer teeth may be present, and the maximum outer diameter of those outer teeth defines D₂). A minimum width We between the boundary line 1125 and the outer peripheral wall of the yoke 111 satisfies: $\frac{{D}_{2} - {D}_{1}}{12} \leq We \leq \frac{{D}_{2} - {D}_{1}}{6} ,$

Specifically, the above formula is equivalent to: $\frac{{D}_{2} - {D}_{1}}{2} \times \frac{1}{6} \leq We \leq \frac{{D}_{2} - {D}_{1}}{2} \times \frac{1}{3} ,$ where, let $\frac{{D}_{2} - {D}_{1}}{2} = {T}_{3} ,$ thus, $\frac{{T}_{3}}{6} \leq We \leq \frac{{T}_{3}}{3} ,$ where T₃ substantially equals the maximum radial width of the stator core 110. We may be, for example, T₃/6, 2T₃/9, 5T₃/18, or T₃/3. When We is between T₃/6 and T₃/3, the distribution of AC loss and core loss in the electric motor 10 is optimized, improving the comprehensive efficiency of the electric motor 10.

Referring to FIGS. 1-5 and 10, in some embodiments, the stator core 110 has N teeth 112, where N may be greater than the number of permanent magnets 230. The tooth 112 has a third wall surface 1123 and a fourth wall surface 1124 arranged opposite each other along the circumferential direction m of the rotation axis 20. A minimum width between the third wall surface 1123 and the fourth wall surface 1124 is Wt. The plurality of teeth 112 includes a first tooth 112a and a second tooth 112b arranged adjacent to each other along the circumferential direction m of the rotation axis 20. The first tooth 112a and the second tooth 112b are spaced apart from each other, and the space therebetween (i.e., the slot) is used to accommodate the coil winding. It should be noted that the first tooth 112a and the second tooth 112b are any two adjacent teeth 112 among the teeth 112, and the different designations are only for distinction. The first tooth 112a has a third end member 1121 (the shoe of the first tooth 112a) away from the yoke 111. The second tooth 112b has a fourth end member 1122 (the shoe of the second tooth 112b) away from the yoke 111. Along the circumferential direction m, the first end member 1121 and the second end member 1122 are spaced apart, and a minimum width between the first end member 1121 and the second end member 1122 is Wx. The rotor assembly 200 further includes a rotor core 210 and a shaft. The rotor core 210 includes an inner core 211 and an outer core 212. The inner core 211 is annular and arranged around the rotation axis 20, and the shaft extends through the inner core 211. The outer core 212 includes a plurality of core segments 2121 distributed around the inner core 211. The outer core includes a plurality of core segments distributed around the inner core, with the core segments and permanent magnets alternately disposed in the circumferential direction m one-by-one about the rotation axis 20, i.e., each permanent magnet 230 is sandwiched between two adjacent core segments 2121. The plurality of core segments 2121 includes a first core segment 2121a and a second core segment 2121b adjacent to each other along the circumferential direction m of the rotation axis 20 (i.e., for ease of description, two core segments 2121 adjacent along the circumferential direction m among the core segments 2121 are named the first core segment 2121a and the second core segment 2121b). The first core segment 2121a has a third end member 21211 facing away from the inner core 211. The second core segment 2121b has a fourth end member 21212 facing away from the inner core 211. The third end member 21211 and the fourth end member 21212 are spaced apart, and a minimum width K between the third end member 21211 and the fourth end member 21212 satisfies: Wx ≤ K ≤ Wt. In this configuration, on one hand, the third end member 21211 and the fourth end member 21212 are spaced apart from each other, thereby reducing magnetic flux leakage at this location. On the other hand, when the minimum width K between the third end member 21211 and the fourth end member 21212 is too small, the electric motor 10 may have excessive flux leakage, resulting in a decreased air-gap flux density and thus a decreased efficiency. When the minimum spacing K is too large, the limiting and positioning effect of each core segment on the permanent magnet 230 is reduced. The minimum width K between the third end member 21211 and the fourth end member 21212 needs to be determined in consideration of flux leakage, armature current increase, and demagnetization resistance of the electric motor 10. When Wx ≤ K ≤ Wt, various effects of the electric motor 10 can be balanced.

It should be noted that in the above embodiments, the value of Wx may be arbitrarily selected according to actual needs, and it does not need to satisfy the range requirement of T₂/6 ≤ Wx ≤ T₂/2 in the previous embodiments; the value of Wt may be arbitrarily selected according to actual needs, and it does not need to satisfy the range requirement of T₁/4 ≤ Wt ≤ 2T₁/3 in the previous embodiments. In further embodiments, Wx ≤ K ≤ Wt; and T₂/6 ≤ Wx ≤ T₂/2; and T₁/4 ≤ Wt ≤ 2T₁/3, with such configurations, it can further improve the balance of various effects of the electric motor 10.

Referring to FIGS. 6-9, in some embodiments, a first limit protrusion 21213 is provided on a side of the third end member 21211 near the fourth end member 21212, and a second limit protrusion 21214 is provided on a side of the fourth end member 21212 near the third end member 21211. The first limit protrusion 21213 and the second limit protrusion 21214 are spaced apart and arranged opposite each other along the circumferential direction m. A minimum width between the first limit protrusion 21213 and the second limit protrusion 21214 equals the minimum width K between the third end member 21211 and the fourth end member 21212. A side wall of the permanent magnet 230 disposed between the first core segment 2121a and the second core segment 2121b facing away from the rotation axis 20 respectively abuts against wall surfaces of the first limit protrusion 21213 and the second limit protrusion 21214 that face the rotation axis 20.

Referring to FIGS. 6-9, in some embodiments, a third limit protrusion 21215 is further provided on a side of an end member of the first core segment 2121a near the rotation axis 20 that is near the second core segment 2121b, and a fourth limit protrusion 21216 is further provided on a side of an end member of the second core segment 2121b near the rotation axis 20 that is near the first core segment 2121a. The third limit protrusion 21215 and the fourth limit protrusion 21216 are spaced apart and arranged opposite each other along the circumferential direction m. A side wall of the permanent magnet 230 near the rotation axis 20 respectively abuts against wall surfaces of the third limit protrusion 21215 and the fourth limit protrusion 21216 that face away from the rotation axis 20, thereby restricting the permanent magnet 230 from moving toward the rotation axis 20.

Referring to FIGS. 6 and 10-12, in some embodiments, the outer core 212 is disconnected from the inner core 211, thereby reducing magnetic flux leakage. Further, along the circumferential direction m, each of the core segments 2121 is disconnected from each other, thereby further reducing magnetic flux leakage. When the core segments 2121 in the outer core 212 are disconnected from each other and the outer core 212 is disconnected from the inner core 211, to facilitate assembly, in some embodiments, the rotor assembly 200 further includes an injection molded member 220. The injection molded member 220 fills a gap between the outer core 212 and the inner core 211 and connects the outer core 212 and the inner core 211. During specific processing, the outer core 212, the inner core 211, and the permanent magnets 230 may first be positioned in corresponding positions, and then the injection molded member 220 is injection-molded so that the injection molded member 220 at least fills the gap between the outer core 212 and the inner core 211, thereby connecting the outer core 212 and the inner core 211. In some embodiments, the injection molded member 220 may also connect the permanent magnets 230, making the connection between the permanent magnets 230 and each outer core segment 2121 more stable.

In some embodiments, an outer peripheral wall of the outer core 212 may be arc-shaped and designed to be non-concentric with the axis of the shaft, while the shoe of the tooth 112 is chamfered, so that the air gap of the electric motor 10 is non-uniform, thereby changing the distribution of air gap magnetic flux density and reducing the cogging torque of the electric motor 10.

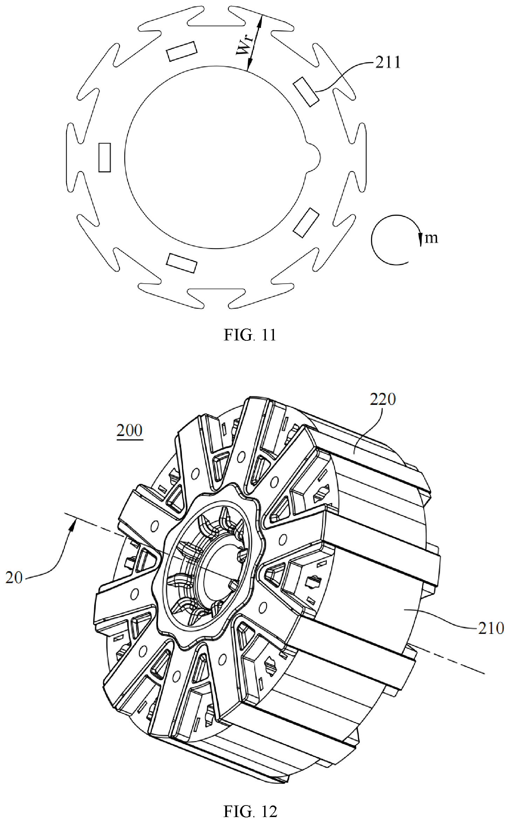

Referring to FIG. 12, in some embodiments, the stator assembly 100 may also be provided with an injection-molded part separate from the injection molded member 220 of the rotor assembly 200. A second trench for injection molding 1111 may be provided at a position on the outer periphery of the yoke 111 opposite each tooth 112. Each second trench for injection molding 1111 is configured to be filled with an injection molding material after assembly of the stator assembly 100, thereby improving structural stability of the stator assembly 100. Specifically, the second trench for injection molding 1111 may extend through the stator assembly 100 along a second direction Y, and a cross-sectional area of the second trench for injection molding 1111 on a side closer to the rotation axis 20 is larger than that on a side farther from the rotation axis 20, so that plastic injection-molded in the second trench for injection molding 1111 is less likely to disengaged from the stator core 110. Specifically, in some embodiments, both the injection molding material connecting the stator assembly 100 and the injection molding material connecting the rotor assembly 200 may be a thermosetting plastic, for example, PBT plastic. In other embodiments, a fastener, such as a screw, may be inserted through the second trench for injection molding 1111 to fix the stator core.

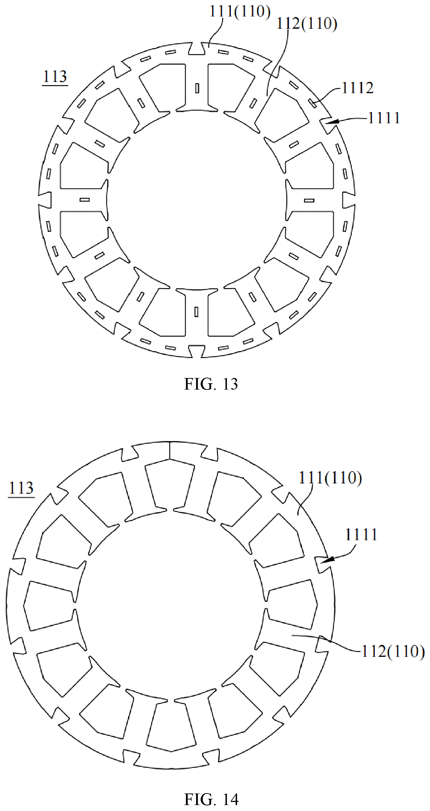

In some embodiments, the stator core 110 includes a plurality of laminations 113 stacked along a direction parallel to the rotation axis 20. The lamination 113 satisfies any one of the following conditions a) - d):
a) Referring to FIG. 13, in some embodiments, the lamination 113 is integrally stamped from a first sheet body, and a plurality of such integrally formed laminations 113 are stacked along the direction parallel to the rotation axis 20 to form the stator core 110, which allows faster processing of the lamination 113;
b) Referring to FIG. 2, in some embodiments, the lamination 113 is formed by joining a plurality of core units distributed along the circumferential direction m of the rotation axis 20, where each core unit is integrally stamped from a second sheet body and includes at least one tooth 112. In this embodiment, each core unit has the same shape, such that twelve core units can be stamped and joined in an annular shape with adjacent core units connected to form one lamination 113, and a plurality of such laminations 113 are stacked in the direction parallel to the rotation axis 20 to form the stator core 110, which reduces stamping waste and lowers material cost. In this case, each core unit has one tooth 112. In other embodiments, each core unit may have a plurality of teeth 112, thereby lowering material cost while improving processing efficiency;
c) Referring to FIG. 14, in some embodiments, the lamination 113 is formed by bending a strip-shaped intermediate body circumferentially into a ring and joining ends thereof. The intermediate body is integrally stamped from a third sheet body. In this case, on one hand, compared to integrally stamping the lamination 113 from a first sheet, stamping waste is reduced, and compared to stamping core segments and joining them to form the lamination 113, processing efficiency is improved;
d) Referring to FIG. 13, in some embodiments, the lamination 113 is provided with a limit member 1112. The limit member 1112 is a recess formed on one side wall of the lamination 113 along a second direction Y or a protrusion formed on the other side wall of the lamination 113 along the second direction Y. The second direction Y is parallel to the rotation axis 20. In this case, when a plurality of laminations 113 are stacked along the direction, the protrusion of one lamination 113 is inserted into the recess of an adjacent lamination 113, while its recess receives another protrusion of another adjacent core lamination 113. This stabilizes the relative circumferential positions of the laminations 113, preventing relative circumferential movement. The number of limit members 1112 depends on actual needs. In this case, each core unit has three positioning limiting 1112, where the yoke 111 of each lamination 113 unit has two limit members 1112, located at two ends of the yoke 111 of each lamination 113 unit along the circumferential direction m. The tooth 112 of each lamination 113 unit has one limit member 1112. The specific structure of the limit member 1112 depends on actual needs. In this embodiment, the limit member 1112 in a form of recess or protrusion is formed rectangular. In other embodiments, the rotor assembly 200 may include laminations with such limit members, which will not be detailed here.

In some embodiments, the stator assembly 100 further includes a coil winding wound on each tooth 112. The coil winding may be a copper wire winding, which provides better overall performance of the electric motor 10. Alternatively, in other embodiments, the coil winding may be an aluminum wire winding. Although the overall performance of aluminum wire windings is inferior to that of copper wire windings, when the condition 0.5 ≤ D₁/D₂ ≤ 0.6 is satisfied, the electric motor 10 with aluminum wire windings exhibits a more significant performance improvement compared to the related technologies.

Referring to FIGS. 6-7 and 10-11, in some embodiments, each core segment 2121 includes a plurality of core laminations 213 stacked along the second direction Y, the second direction Y being parallel to the rotation axis 20. The core laminations 213 has a minimum thickness Ts along the second direction Y. In other words, among the core laminations 213, the thinnest lamination 213 along the second direction Y has a thickness Ts. A mounting slot 214 is provided between each adjacent pair of core segments 2121. The core segment 2121 includes M permanent magnets 230, which may specifically be ten permanent magnets 230. Each permanent magnet 230 is disposed in a corresponding mounting slot 214. The M permanent magnets 230 include a first permanent magnet 230a and a second permanent magnet 230b (the first permanent magnet 230a and the second permanent magnet 230b are any two permanent magnets 230 located on opposite sides of the rotation axis 20 along the first direction X). The first permanent magnet 230a and the second permanent magnet 230b are located on opposite sides of the rotation axis 20 along the first direction X perpendicular to the rotation axis 20. The first permanent magnet 230a has a fifth wall surface 233 facing the second permanent magnet 230b, and the second permanent magnet 230b has a sixth wall surface 234 facing the first permanent magnet 230a. A maximum distance between the fifth wall surface 233 and the sixth wall surface 234 is D₃, and a maximum width Wm of the fifth wall surface 233 along the two sides in the circumferential direction m satisfies: $\frac{π \times {D}_{3} - X \times M \times Ts}{M} = Wm ,$

Specifically, the above formula is equivalent to: $\frac{π \times {D}_{3}}{M} = Wm + X \times Ts ,$ where, let $\frac{π \times {D}_{3}}{M} = {T}_{4} ,$ thus, ${T}_{4} = Wm + X \times Ts ,$
where 1 ≤ X ≤ 5. For example, X may be 1, 2, 3, 4, or 5. T₄ substantially equals the theoretical maximum dimension of the fifth wall surface 233. With 1 ≤ X ≤ 5, the maximum width Wm of the fifth wall surface 233 along the circumferential direction m is less than the theoretical maximum dimension minus one to five times the minimum thickness Ts of the thinnest core lamination 213. This configuration effectively limits magnetic flux leakage at support positions near the rotation axis 20 at both ends of any outer core 212, thereby improving motor power density and reducing motor cost. Constraining the width of the permanent magnets 230 at an end near the rotation axis 20 improves low-speed light-load performance of the electric motor 10 and enhances demagnetization resistance of the permanent magnets 230, enabling efficient and reliable motor operation.

It should be noted that since the first permanent magnet 230a may be any one of the permanent magnets 230, in some embodiments, the maximum width along the circumferential direction m between the sides of each permanent magnet 230 at a side wall facing the rotation axis 20 may be Wm. The first permanent magnet 230a has a seventh wall surface 235 and an eighth wall surface 236 opposite each other along the circumferential direction m. If the seventh and eighth wall surfaces 235, 236 are planar and parallel, then the width between them equals the maximum width Wm of the fifth wall surface 233 along the circumferential direction m. If the seventh and eighth wall surfaces 235, 236 are not parallel or are non-planar, a maximum width between the end of the seventh wall surface 235 near the rotation axis 20 and the end of the eighth wall surface 236 near the rotation axis 20 equals the maximum width Wm of the fifth wall surface 233 along the circumferential direction m. If chamfers are respectively present between the fifth wall surface 233 and the seventh and eighth wall surfaces 235, 236, a maximum width, between an edge of the chamfer between the fifth wall surface 233 and the seventh wall surface 235 that is adjacent to the seventh wall surface 235 and an edge of the chamfer between the fifth wall surface 233 and the eighth wall surface 236 that is adjacent to the eighth wall surface 236, is defined as Wm.

Referring to FIGS. 6-7 and 10-11, in some embodiments, the inner core 211 is annular and arranged around the rotation axis 20. The inner core 211 has an inner peripheral wall near the rotation axis 20 and an outer peripheral wall away from the rotation axis 20. Along the first direction X, a maximum width Wr between the inner peripheral wall and the outer peripheral wall satisfies Wr ≥ 2 × Ts. For example, Wr may be 2Ts, 2.2Ts, 2.4Ts, 2.6Ts, 2.8Ts, or 3Ts. In this configuration, Wr equals the maximum ring width of the inner core 211 along the first direction X. A larger Wr reduces the gap between the inner core 211 and the outer core 212, making injection molding difficult and reducing connection stability. A smaller Wr reduces support for a shaft extending through the inner core 211. When Wr ≥ 2 × Ts, the gap between the inner core 211 and the outer core 212 is increased, providing more space for injection molding and improving connection stability of the inner core 211 and the outer core 212, while also providing better support for the shaft.

Referring to FIGS. 6-7 and 10-11, in some embodiments, along the radial direction of the rotor assembly 200, a minimum width Wa between each core segment 2121 and the inner core 211 satisfies Wa ≥ 2.5 mm. For example, Wa may be 2.5 mm, 2.7 mm, 3 mm, 3.2 mm, 3.5 mm, or 3.7 mm, etc. In this configuration, on one hand, the gap between the inner core 211 and the outer core 212 may be increased, thereby increasing the injection molding space and improving the connection stability between the inner core 211 and the outer core 212; on the other hand, the support stability for the shaft may also be improved. In further embodiments, Wa may also satisfy Wa ≥ 2 × Ts.

Referring to FIGS. 1-3, 7-11, and 16, in an embodiment, with D1 = 74.8 mm (±0.1 mm), D2 = 136-142 mm, Wt = 9.95 mm (±0.1 mm), We = 7.3 mm (±0.1 mm), Wx = 3-4.2 mm, and K = 4.4 mm (±0.1 mm), the electric motor achieves a relatively favorable efficiency-to-cost ratio.

In accordance with a second aspect of the present disclosure, an embodiment provides an air supply assembly. The air supply assembly includes the electric motor 10 according to any of the above embodiments. The air supply assembly is used to drive air toward a target direction and can be applied in appliances such as electric fans, air conditioners, hair dryers, range hoods, and fresh air devices.

In accordance with a third aspect of the present disclosure, an embodiment provides an air treatment device. The air treatment device includes the air supply assembly described above. The air treatment device may be, for example, an electric fan, an air conditioner, a hair dryer, a range hood, or a fresh air device.

It should be noted that any directional indications (e.g., upper, lower, left, right, front, back) in the embodiments are used only to explain relative positions, movements, etc., under a specific orientation. If the orientation changes, the directional indications change accordingly.

Terms such as "first," "second," etc., are used for descriptive purposes only and do not indicate or imply relative importance or implicitly indicate the number of technical features. Thus, features defined with "first," "second," etc., may explicitly or implicitly include at least one such feature. The term "and/or" includes any and all combinations of one or more of the associated listed items. Taking "A and/or B" as an example, it includes the solution of A alone, the solution of B alone, or the solution of both A and B. Technical features of different embodiments may be combined if feasible; if a combination leads to contradiction or is impractical, it is not intended to be within the scope of the present disclosure.

The above descriptions are only preferred embodiments of the present disclosure and are not intended to limit the scope of the present disclosure. Any equivalent structural changes made using the specification and drawings of the present disclosure, or any direct or indirect applications in other related technical fields, falls within the scope of patent protection of the present disclosure.

## Claims

1. An electric motor, comprising:
a rotor assembly configured to rotate around a rotation axis and comprising a plurality of permanent magnets distributed around the rotation axis, wherein:
the plurality of permanent magnets comprise a first permanent magnet and a second permanent magnet located on opposite sides of the rotation axis along a first direction perpendicular to the rotation axis,
the first permanent magnet has a first wall surface facing away from the second permanent magnet, and the second permanent magnet has a second wall surface facing away from the first permanent magnet; and
a stator assembly comprising a stator core comprising:
an annular yoke arranged around an outer side of the rotor assembly; and
a plurality of teeth distributed around the outer side of the rotor assembly, each of the teeth having one end connected to an inner peripheral wall of the yoke and another end spaced apart from the rotor assembly,
wherein a minimum distance D₁ between the first wall surface and the second wall surface and a maximum outer diameter D₂ of the stator core satisfy 0.5 ≤ D₁/D₂ ≤ 0.6.

2. The electric motor of claim 1, wherein 0.53 ≤ D₁/D₂ ≤ 0.57.

3. The electric motor of claim 1 or 2, wherein 40 mm ≤ D₁ ≤ 100 mm, or 60 mm ≤ D₁ ≤ 80 mm.

4. The electric motor of any of claims 1 to 3, wherein,
the stator core has N teeth, and N≥6,
each of the N teeth has a third wall surface and a fourth wall surface arranged opposite each other along a circumferential direction of the rotation axis,
a minimum width Wt between the third wall surface and the fourth wall surface satisfies: $\frac{π \times \left({D}_{1}+{D}_{2}\right)}{8 \times N} \leq Wt \leq \frac{π \times \left({D}_{1}+{D}_{2}\right)}{3 \times N} .$

5. The electric motor of any of claims 1 to 4, wherein,
the stator core has N teeth, and N≥6,
the plurality of teeth comprises a first tooth and a second tooth arranged adjacent to each other along the circumferential direction of the rotation axis,
the first tooth has a first end member facing away from the yoke and the second tooth has a second end member facing away from the yoke, and
the first end member and the second end member are spaced apart, and a minimum width Wx between the first end member and the second end member along the circumferential direction satisfies: $\frac{π \times {D}_{1}}{10 \times N} \leq Wx \leq \frac{π \times {D}_{1}}{5 \times N} .$

6. The electric motor of any of claims 1 to 5, wherein,
each of the teeth has a third wall surface on one side in the circumferential direction of the rotation axis, and the third wall surface meets the inner peripheral wall at a first boundary line, and
an outer peripheral wall of the yoke defines the maximum outer diameter of the stator core, and
a minimum width We between the first boundary line and the outer peripheral wall of the yoke satisfies: $\frac{{D}_{2} - {D}_{1}}{12} \leq We \leq \frac{{D}_{2} - {D}_{1}}{6} .$

7. The electric motor of any of claims 1 to 6, wherein,
each of the teeth has the third wall surface and the fourth wall surface arranged opposite each other along the circumferential direction of the rotation axis with the minimum width Wt therebetween,
the plurality of teeth comprises the first tooth and the second tooth arranged adjacent to each other along the circumferential direction, the first tooth has the first end member facing away from the yoke and the second tooth has the second end member facing away from the yoke, and the first end member and the second end member are spaced apart with the minimum width Wx therebetween,
the rotor assembly further comprises a rotor core and a shaft, the rotor core comprises an annular inner core arranged around the rotation axis and an outer core, and the shaft extends through the inner core,
the outer core comprises a plurality of core segments distributed around the inner core, with the core segments and permanent magnets alternately disposed in the circumferential direction one-by-one about the rotation axis,
the plurality of core segments comprises a first core segment and a second core segment adjacent to each other along the circumferential direction,
the first core segment has a third end member facing away from the inner core and the second core segment has a fourth end member facing away from the inner core, and
the third end member and the fourth end member are spaced apart, such that a minimum width K between the third end member and the fourth end member satisfies: $Wx \leq K \leq Wt .$

8. The electric motor of claim 7, wherein each of the core segments is disconnected from each other along the circumferential direction, and each core segment has an end member proximal to and spaced apart from the inner core.

9. The electric motor of claim 8, wherein the rotor assembly further comprises an injection molded member that connects the outer core and the inner core and fills a gap between the outer core and the inner core.

10. The electric motor of any of claims 1 to 9, wherein the stator core comprises a plurality of laminations stacked along the direction parallel to the rotation axis, the lamination satisfies any one of the following conditions a) - d):
a) the lamination is integrally stamped from a first sheet body;
b) the lamination is formed by joining a plurality of core units distributed along the circumferential direction of the rotation axis, each core unit being integrally stamped from a second sheet body and comprising at least one of the teeth;
c) the lamination is formed by bending a strip-shaped intermediate body circumferentially into a ring and joining ends of the intermediate body, the intermediate body being integrally stamped from a third sheet;
d) the lamination is provided with a limit member, and the limit member comprises a recess formed on a surface and a protrusion formed on another surface of the lamination along a second direction, the second direction being parallel to the rotation axis.

11. The electric motor of any of claims 1 to 10, wherein the stator assembly further comprises a coil winding wound on each of the teeth and the coil winding is a copper wire winding, or
the stator assembly further comprises a coil winding wound on each of the teeth and the coil winding is an aluminum wire winding.

12. An air supply assembly, comprising the electric motor any of claims 1 to 11.

13. An air treatment device, comprising the air supply assembly of claim 12.
